# EUROPÄISCHE PATENTSCHRIFT

(11) **EP 1 146 432 B1**
(45) Veröffentlichungstag und Bekanntmachung des Hinweises auf die Patenterteilung: **09.06.2010**
(21) Anmeldenummer: 01113330.3
(22) Anmeldetag: 22.12.1997
(51) Int. Cl.: G06F 15/78

(54) **Umkonfigurierungs-Verfahren für programmierbare Bausteine während der Laufzeit**
Reconfiguration method for programmable components during runtime
Procédé de reconfiguration pour composants programmables pendant leur durée de fonctionnement

(30) Priorität: 20.12.1996 DE 19654593
(43) Veröffentlichungstag der Anmeldung: 17.10.2001
(62) Teilanmeldung aus: 97954333.7
(73) Patentinhaber: Richter, Thomas, 04703 Bockelwitz (DE); Krass, Maren, 8044 Zürich (CH)
(72) Erfinder: Vorbach, Martin, 80689 München (DE); Münch, Robert, 76149 Karlsruhe (DE)
(74) Vertreter: Pietruk, Claus Peter

(56) Entgegenhaltungen:
- EP-A- 0 497 029
- EP-A- 0 748 051
- LING X ET AL: "WASMII: AN MPLD WITH DATA-DRIVEN CONTROL ON A VIRTUAL HARDWARE" JOURNAL OF SUPERCOMPUTING, KLUWER ACADEMIC PUBLISHERS, DORDRECHT, NL, Bd. 9, Nr. 3, 1995, Seiten 253-276, XP000589468 ISSN: 0920-8542
- VILLASENSOR J ET AL: "EXPRESS LETTERS VIDEO COMMUNICATIONS USING RAPIDLY RECONFIGURABLE HARDWARE" IEEE TRANSACTIONS ON CIRCUITS AND SYSTEMS FOR VIDEO TECHNOLOGY, IEEE INC. NEW YORK, US, Bd. 5, Nr. 6, 1. Dezember 1995 (1995-12-01), Seiten 565-567, XP000545963 ISSN: 1051-8215

## Beschreibung

### Stand der Technik

Die vorliegende Erfindung befasst sich mit programmierbaren Logikbausteinen. Derartige programmierbare Logikbausteine sind bekannt. Aus der EP 0 497 029 ist ein rekonfigurierbarer sequenzieller Prozessor bekannt, der eine Datenbank zum Speichern zu verarbeitender Prozess umfasst, einen programmierbaren Logikblock-Adressgenerator zum Adressieren der Daten in der Datenbank, eine programmierbare arithmetische Logikblockeinheit, die auf die Datenbank zur Verarbeitung der Daten, die von dem programmierbaren Logikblock-Adressgenerator adressiert werden, ansprechend ist, ein Adressgeneratorhardwarekonfiguxationsfile mit einer Vielzahl von Konfigurationsfiles zum Konfigurieren des programmierbaren Logikblock-Adressgenerators in einer einer Vielzahl von Adressierungskonfigurationen im Ansprechen auf einen Adress-Opcode; ein Arithmetikhardwarekonfigurationsfile mit einer Vielzahl von Konfigurationsfiles zum Konfigurieren der programmierbaren Logikblockarithmetikeinheit in einer eine Vielzahl von Verarbeitungskonfigurationen im Ansprechen auf einen Arithmetik-Opcode; und ein Mittel zum Liefern einer Serie von Opcodes an jedes Konfigurationsfile zur Ermöglichung, dass der programmierbare Logikblock-Adressgenerator und die programmierbare Logikblockarithmetikeinheit konfiguriert wird, um sequentiell eine entsprechende Reihe von Arithmetik-Logik-Operationen auf den Daten der Datenbank ausführt, umfasst.

Aus dem Aufsatz WASMII: AN MPLD WITH DATA-DRIVEN CONTROL ON A VIRTUAL HARDWARE von X. LING et al., Journal of Supercomputing, 9, 253-276 (1995), ist es bekannt, dass ein relativ großer Digitalschaltkreis auf einer relativ kleinen Hardware durch schnelle Umkonfiguration realisiert werden kann. Es wird besprochen, wie eine schnelle Umkonfiguration möglich ist. Danach soll eine datenflussgesteuerte Umkonfiguration vorgenommen werden durch Aktivierung-entsprechender Seiten, sobald alle der zur Umkonfiguration erforderlichen Token einer entsprechenden Einheit eingetroffen sind.

Aus dem Aufsatz VIDEO COMMUNICATIONS USING RAPIDLY RECONFIGU-RABLE HARDWARE von J. VILLASENOR et al., IEEE Transactions on Circuits and Systems for Video Technology, IEEE Inc. New Y-ork, US, Bd. 6, Nr. 6, 1. Dezember 1995 (1995-12-01), Seiten 565-567, XP000545963 ISSN: (1996-12-11), ist es bekannt, eine Videocodierung durch schnelle Rekonfiguration zu implementieren. Erwähnt wird u. a. die Möglichkeit partieller Rekonfiguration.

Aus der EP 0 748 051 A2 ist ein weiteres System und Verfahren zur dynamischen Rekonfigurierung eines programmierbaren Gatearrays bekannt.

Für programmierbare Bausteine mit zwei- oder mehrdimensionaler Zellanordnung sind also zumindest zwei verschiedene Programmierarten bekannt:
1. Einmalig, das heißt die Konfiguration kann nach der Programmierung nicht mehr geändert werden. Alle Konfigurierten Elemente des Bausteins führen also die gleiche Funktion, über den gesamten Zeitraum durch, in dem die Anwendung abläuft.
2. Im Betrieb, das heißt die Konfiguration kann nach Einbau des Bausteins, durch daß Laden einer Konfigurationsdatei, zum Startbeginn der Anwendung, geändert werden. Die meisten Bausteine (insbesondere die FPGA Bausteine), lassen sich während des Betriebes nicht wieder umkonfigurieren. Bei umkonfigurierbaren Bausteinen, ist eine Weiterverarbeitung von Daten während des Umkonfigurierens meistens nicht möglich und die benötigte Umkonfigunerungszeit erheblich zu groß.

Neben den FPGAs, gibt es noch die sogenannten DPGAs. Diese Bausteine speichern eine kleine Anzahl an verschiedenen Konfigurationen, welche durch ein spezielles Datenpaket ausgewählt werden. Eine Umkonfigurierung dieser Speicher während der Laufzeit ist nicht möglich

### Probleme

Große Probleme bereitet die Umkonfigurierung von gesamten programmierbaren Bausteinen oder Teilen davon während der Laufzeit und dabei besonders die Synchronisation. Alle bisherigen Lösungen halten die Verarbeitung des kompletten Bausteins, während der Umkonfigurierung, an. Ein weiteres Problem ist die Selektion der neu zu ladenden Teilkonfiguration und das Integrieren dieser Teilkonfiguration in die bereits Bestehende Konfiguration.

Die Aufgabe der vorliegenden Erfindung zielt darauf, neues für die gewerbliche Anwendung bereitzustellen. Die Lösung dieser Aufgabe wird unabhängig beansprucht. Bevorzugte Ausführungen finden sich in den Unteransprüchen.

Durch das Beschriebene ist es möglich einen zur Laufzeit umkonfigurierbaren Baustein effizient und ohne Beeinflussung der nicht an der Umkonfigurierung beteiligten Bereiche umzuladen. Weiterhin ermöglicht das Verfahren das Selektieren von Konfigurationen in Abhängigkeit der aktuellen Konfiguration. Das Problem der Synchronisation der an der Umkonfiguration beteiligten und nicht beteiligten Bereiche wird ebenfalls gelöst.

### Übersicht

Beschrieben wird ein Verfahren zum Umkonfigurieren von programmierbaren Bausteinen, bestehend aus einer zwei oder mehrdimensionalen Zellanordnung. Das Verfahren ermöglicht die Umkonfigurierung des Bausteins oder der Bausteine, ohne die Arbeitsfähigkeit der nicht an der Umkonfigurierung beteiligten Zellen, einzuschränken. Das Verfahren ermöglicht das Laden von kompletten Konfigurationen oder von Teilkonfigurationen in den oder die programmierbaren Bausteine. Die Einzelheiten und besondere Ausgestaltungen, sowie Merkmale des erfindungsgemäßen Verfahrens zun Umkonfigurierens von programmierbaren Bausteinen, sind Gegenstand der Patentansprüche.

Die Detailbeschreibung setzt einen programmierbaren Baustein voraus, wobei folgende Eigenschaften bzw. Mittel vorhanden sein können:

### 1. Ladelogik

Die Ladelogik ist der Teil des Bausteins, welcher das Laden und Eintragen von Konfigurationsworten in die zu konfigurierenden Elemente des Bausteins (Zellen) durchführt.

### 2. Zellen

Der Baustein besitzt eine Vielzahl an Zellen, welche einzeln durch die Ladelogik adressiert werden können.

### 3. Rückmeldung Ladelogik

Jede Zelle oder Gruppe von Zellen muß der Ladelogik mitteilen können, ob sie umkonfiguriert werden kann.

### 4. Rückmeldung Zellen

Jede Zelle muß die Möglichkeit haben, ein STOP Signal an die Zellen zu senden, von denen sie ihre zu verarbeitenden Daten erhält.

### 5. START/STOP Kennung

Jede Zelle muß eine Möglichkeit besitzen, ein START/STOP Kennung einzustellen.
a. Die START Kennung zeichnet eine Zelle als den Beginn einer längeren Verarbeitungskette (Makro) aus.
b. Die STOP Kennung markiert das Ende des Makros, also den Punkt, an dem die Verarbeitung des Makros ein Ergebnis geliefert hat.

### Aufbau eines Konfigurationswortes

Die Ladelogik ist eine Zustandsmaschine, welche Konfigurationsworte verarbeiten kann. Neben Konfigurationsworten für Zellen, existieren Einträge, welche durch die Ladelogik als Befehle erkannt werden können. Es ist also möglich, zu unterscheiden, ob der Inhalt des Konfigurationswortes an eine Zelle zu übertragen ist oder einen Befehl für die Zustandsmaschine darstellt.

Ein Konfigurationswort, welches an Zellen des Bausteins übertragen wird, muß dabei mindestens folgende Daten enthalten:
1. Adresse der Zelle. Zum Beispiel als lineare Nummer oder als X,Y Koordinaten.
2. Konfigurationswort, welches in die Zelle übertragen wird. Kennungen und Befehle für die Ladelogik

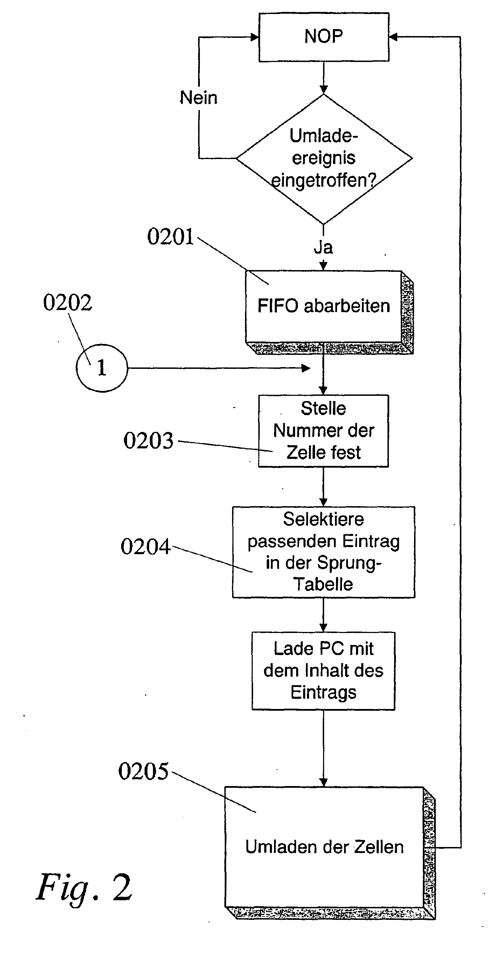

Für eine korrekte Arbeitsweise der Ladelogik muß diese nur zwei Befehlsworte erkennen können. Dies sind:
1. END
   Dies ist ein Befehl, welche die Ladelogik in einen Zustand versetzt, in dem sie auf das Eintreffen von Ereignissen von Zellen, wartet. (Figur 2)
2. DISPATCH(Eintragsnummer, Adresse)
   Die Ladelogik trägt in die Adresse, welche durch den Parameter Eintragsnummer angegeben wird, der Sprung-Tabelle den Wert des Parameters Adresse ein.

Weiterhin kann die Ladelogik einen Eintrag als Leer-Eintrag erkennen. Dies wird dadurch erreicht, daß ein bestimmtes Bit-Muster als Leer-Kennung definiert ist, welches durch die Ladelogik erkannt werden kann.

### Die Sprung-Tabelle

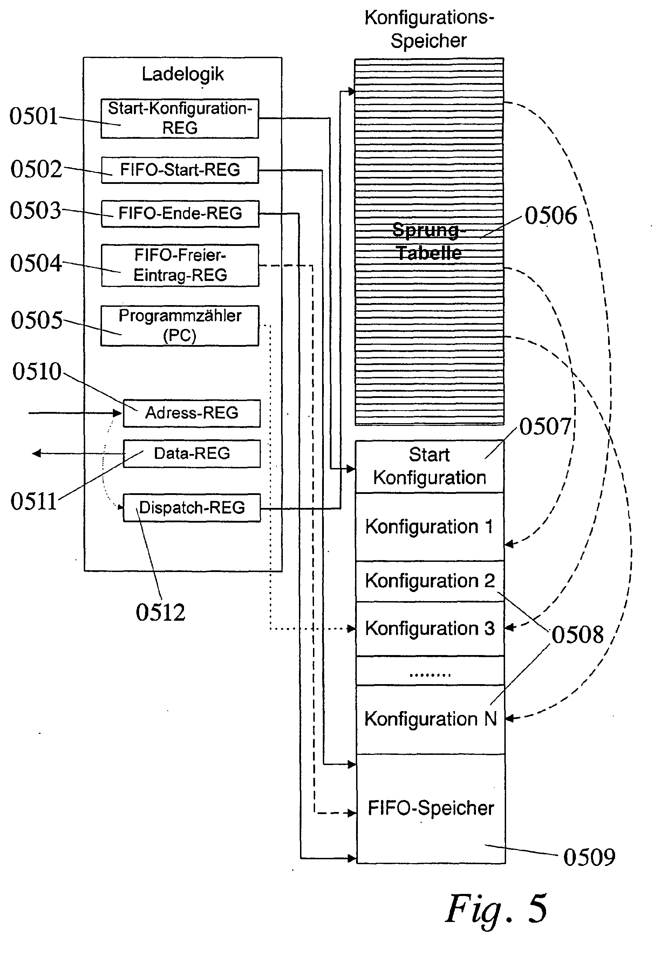

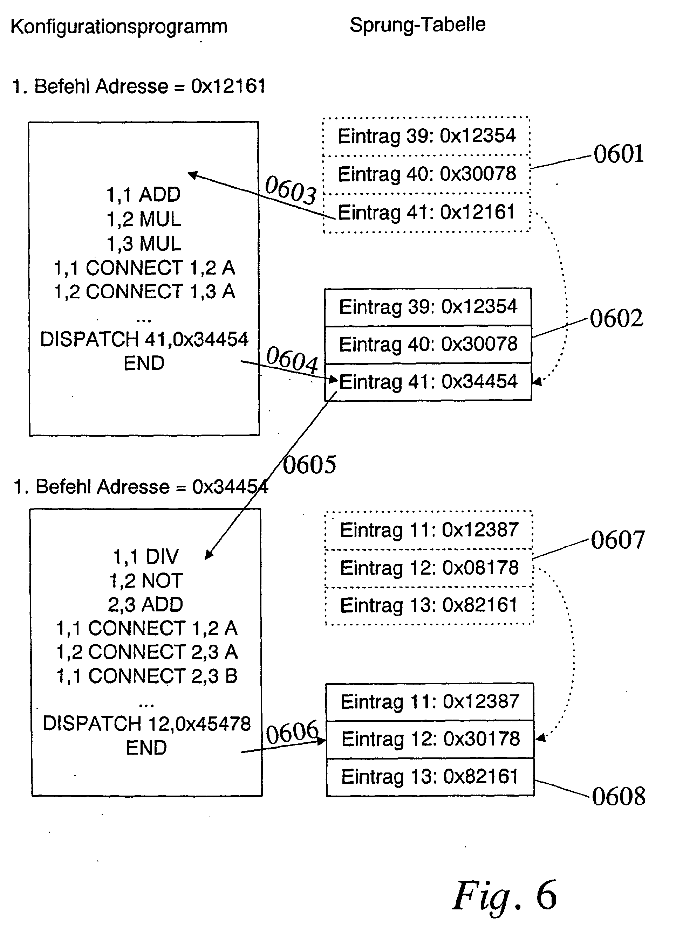

Im Konfigurationsspeicher existiert eine Sprung-Tabelle (0506). Die Größe der Sprung-Tabelle ist dabei so gewählt, daß für jede Zelle, welche von der Ladelogik addresiert werden kann, genau ein einziger Eintrag vorhanden ist. Zu jeder Zelladresse existiert genau ein einziger Eintrag in der Sprung-Tabelle, welcher durch die Ladelogik berechnet werden kann. (Figur 5 und 6)

In einem Eintrag der Sprung-Tabelle steht eine Speicheradresse (0601). Diese Speicheradresse gibt an, von wo weitere Konfigurationsdaten (0508) aus dem Konfigurationsspeicher zu lesen sind, falls von dieser Zelle eine Rückmeldung an die Ladelogik erfolgt.

### Start des Systems

Durch einen Reset, also das Rücksetzen des Systems, beginnt die Ladelogik mit dem Empfangen oder Laden von Konfigurationsdaten, von einem Speicher in den Konfigurationsspeicher (0101). Alle Zellen des Bausteines sind in dem Zustand, in dem sie konfiguriert werden können. Danach springt die Ladelogik, durch Laden des Programmzählers (PC) (0505), an eine Speicherstelle, welche die Adresse einer Startkonfiguration (0507) enthält (0102). Diese Startkonfiguration wird solange abgearbeitet, bis die Ladelogik eine END-Kennung erkennt (0103). Diese Startkonfiguration programmiert den Baustein derart, daß eine Verarbeitung von Daten beginnen kann. Nach dem Eintragen der Startkonfiguration, wechselt die Ladelogik, auf Grund der END-Kennung, in einen Zustand, in dem sie auf Ereignisse von den Zellen wartet (0104).

### Eintreffen eines Ereignisses einer Zelle

Nach der Verarbeitung von Daten kann eine Zelle eine Rückmeldung an die Ladelogik senden. Diese Rückmeldung (Ereignis) zeigt an, daß die Zelle und damit das Makro, in dem die Zelle enthalten ist, seine Arbeit beendet hat und das Umladen erfolgen kann.

Bevor allerdings mit dem Laden einer neuen Konfiguration begonnen wird, wird der nachfolgend beschriebene FIFO-Speicher (First-In-First-Out Speicher) abgearbeitet (0201), dessen Organisation garantiert, daß Zellen, die im ersten Versuch nicht umgeladen werden konnten, im zweiten Versuch als erste wieder an der Reihe sind. Dadurch wird verhindert, daß Zellen welche zwischenzeitlich signalisiert haben, daß sie umkonfiguriert werden können, ganz nach hinten in der Bearbeitung rutschen. In diesem Fall könnte ein Deadlock-Situation auftreten, in der das eine Makro erst umkonfiguriert werden kann, wenn ein anderes Makro umkonfiguriert wurde.

Durch die Rückmeldung an die Ladelogik erhält die Ladelogik auch die Adresse oder Nummer der Zelle, welche die Rückmeldung ausgelöst hat. Mit Hilfe dieser Nummen wird der passende Eintrag in der Sprung-Tabelle selektiert (0203, 0204). Die Adresse, welche in diesem Eintrag enthalten ist, gibt den Beginn der zu ladenden Konfiguration innerhalb des Konfigurationsspeichers an (0205).

### Spezieller Speicher bereich

### (FIFO-Speicher)

Das Verfahren muß berücksichtigen, daß es sein kann, daß einige Zellen ihre Arbeit noch nicht beendet haben, diese Zellen jedoch schon umgeladen werden sollen. Alle Konfigurationsdaten der Zellen, bei denen eine solche Bedingung zu trifft, werden in einen speziellen Speicherbereich (FIFO-Speicher) kopiert (0506).

Jedesmal, bevor eine neue Konfiguration geladen werden soll, wird der FIFO-Speicher durchlaufen. Da eine neue Konfiguration geladen werden soll, haben einige Zellen ihre Arbeit beendet und sind in den Zustand 'umkonfigurierbar' übergegangen. Unter diesen Zellen können sich auch solche befinden, bei denen eine Umkonfigurierung, durch die Ladelogik, in einem früheren Versuch gescheitert ist, da diese Zellen ihre Arbeit noch nicht beendet hatte, diese Umkonfigurierung jetzt aber erfolgreich durchgeführt werden kann. Die Ladelogik lädt den PC mit dem Inhalt des Registers, welches auf den Beginn des FIFO-Speicher zeigt (FIFO-Start-REG) (0502) und liest die Daten aus dem FIFO-Speicher. Ein Vergleich stellt fest, ob das Ende des FIFO-Speichers erreicht wurde (0301). Ist dies der Fall, so wird an die Stelle in der Zustandsmaschine zurückgesprungen, an der die Umkonfigurierung fortläuft (0202).

Die Abarbeitung des FIFO-Speichers geschieht ähnlich dem einer Konfiguration innerhalb des Konfigurationsspeichers. Es kann der Fall eintreten, daß eine Zelle auch bei einem weiteren Versuch immer noch nicht umkonfiguriert werden kann. In diesem Fall werden die Konfigurationsdaten, falls eine leere Speicherstelle weiter vorne im FIFO-Speicher existiert, in diese Speicherstelle kopiert (0302).

Dieser Kopiervorgang wird dadurch erreicht, daß die Ladelogik die Startadresse des FIFO-Speichers im FIFO-Start-REG (0502) gespeichert hat und die Endeadresse im FIFO-End-REG (0503). Weiterhin kennt die Ladelogik die Adresse des nächsten freien Eintrags (beginnend vom Anfang des FIFO-Speichers) mittels des FIFO-Free-Entry-REG (0504, 0303). Nachdem das Konfigurationswort in den freien Eintrag kopiert wurde (0304), positioniert die Ladelogik den Zeiger des FIFO-Free-Entry-REG auf den nächsten freien Eintrag (0305), innerhalb des FIFO-Speichers. Die Suche erfolgt dabei in Richtung des Endes des FIFO-Speichers. Danach wird der PC auf den nächsten Eintrag innerhalb des FIFO-Speichers gesetzt (0306).

### Umladen von Zellen

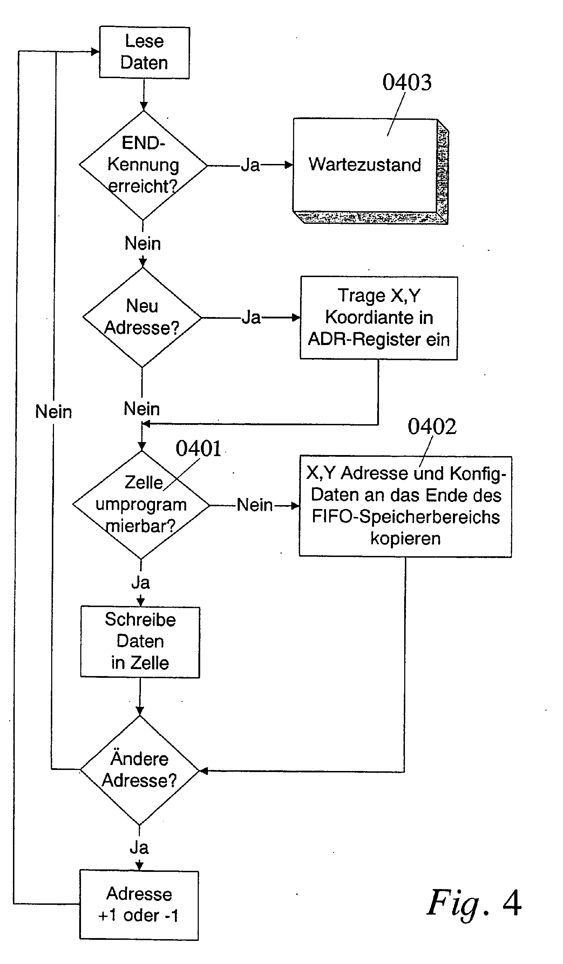

Die Ladelogik liest nun die Konfigurationsdaten aus dem Konfigurationsspeicher. In diesen Daten ist die Adresse der Zelle enthalten, welche umgeladen werden soll (Figur 4). Jede Zelle kann signalisieren, daß sie umgeladen werden kann. Die Ladelogik testet dies (0401). Kann die Zelle umgeladen werden, werden die Konfigurationsdaten von der Ladelogik an die Zelle übertragen.

Ist die Zelle noch nicht bereit, werden die durch die Ladelogik gelesenen Daten in einen Speicherbereich, den FIFO-Speicher, innerhalb des Konfigurationsspeichers geschrieben (0402). Die Adresse an welche die Daten geschrieben werden, ist in einem Register, innerhalb der Ladelogik, abgelegt (FIFO-End-Reg) (0503). Dieser Vorgang wird so oft wiederholt, bis die Ladelogik die END-Kennung des Konfigurationsprogramms erkennt und wieder in den Zustand übergeht, in dem die Ladelogik auf Ereignisse der Zellen wartet (0403).

### Aufbau des Konfigurationsprogramms

Nachdem eine Zelle das Signal zum Umladen gegeben hat und das Makro, in dem die Zelle integriert ist, umgeladen wurde, entsteht eine neue Konfiguration. Die Zelle,die vorher das Signal an die Ladelogik geben hat, kann jetzt eine ganz andere Aufgabe haben, insbesondere kann sie nicht mehr die Zelle sein, welche ein Umladesignal an die Ladelogik abschickt; wobei es möglich sein kann, daß in der neuen Konfiguration wieder die selbe Zelle das Umladesignal an die Ladelogik schickt.

Mittels des DISPATCH-Befehls, innerhalb des Konfigurationsprogramms, kann eine neue Adresse an die Eintragsposition der Zelle in der Sprung-Tabelle geschrieben werden (0604). Diese neue Adresse kann auf eine neue Konfiguration oder Teilkonfiguration zeigen, welche bei einer Rückmeldung von dieser Zelle geladen werden soll.

Kurzbeschreibung der Diagramme
Fig. 1 ist ein Ablaufplan der Schritte, die nach einem Systemstart durchzuführen sind.
Fig. 2 ist ein Ablaufplan der Schritte, die nach dem Eintreffen einer Umkonfigurierungsanforderung durchzuführen sind.
Fig. 3 ist ein Ablaufplan der Schritte, die bei der FIFO-Speicher Bearbeitung durchzuführen sind.
Fig. 4 ist ein Ablaufplan der Schritte, die bei der Konfigurierung der Zellen durchzuführen sind.
Fig. 5 zeigt die Ladelogik mit ihren Registern. Weiterhin ist der Konfigurationsspeicher sowie die Unterteilung in Sprung-Tabelle, Start-Konfiguration, weitere Konfigurationen und der FIFO-Speicher zu sehen.
Fig. 6 zeigt zwei Ausschnitte aus einem Konfigurationsprogramm und vier Ausschnitte aus der Sprung-Tabelle und wie diese in zeitlichem Zusammenhang stehen.

### Detailbeschreibung der Diagramme

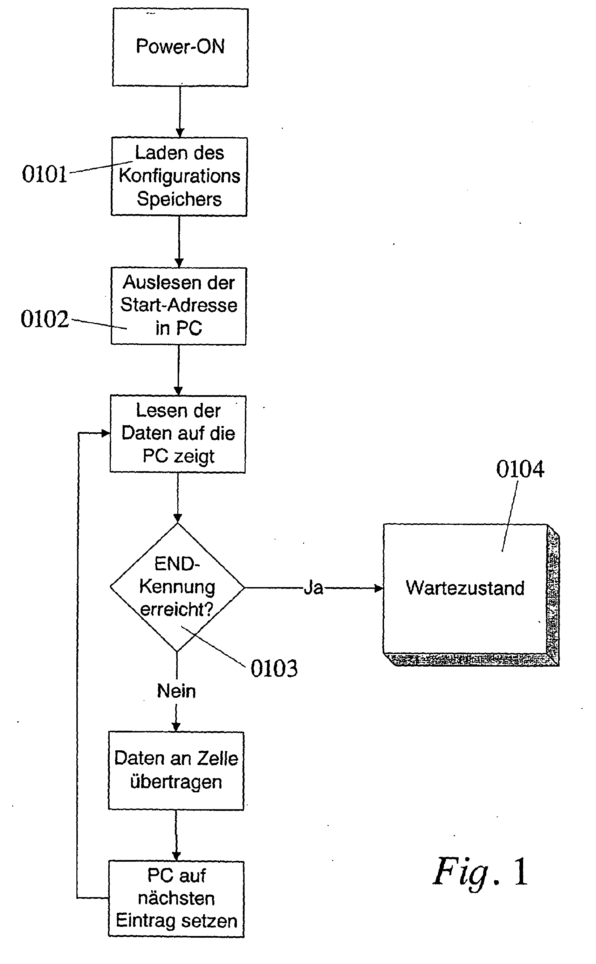

Figur 1 zeigt in einem Ablaufplan, welche Schritte nach einem Systemstart durchzuführen sind. Durch einen Vergleich mit der END-Kennung der Start-Konfiguration wird in den Wartezustand gesprungen (0104).

Figur 2 zeigt in einem Ablaufplan die notwendigen Schritte, welche während des Wartezustandes und, nach dem eine Umkonfigurierung durch eine Zelle signalisiert wurde, durchzuführen sind. Der Ablaufplan besitzt einen Einsprungspunkt (0202), der von anderer Stelle angesprungen wird.

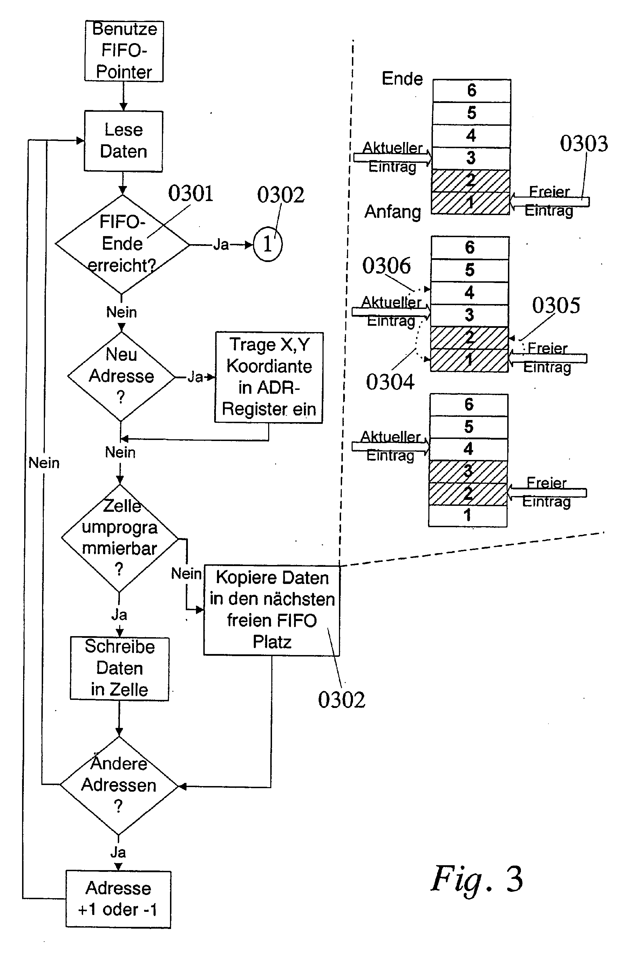

Figur 3 zeigt in einem Ablaufplan, wie die Behandlung des FIFO-Speichers durchzuführen ist. Weiterhin ist dargestellt, wie der Kopiervorgang innerhalb des FIFO-Speichers arbeitet.

Figur 4 zeigt in einem Ablaufplan, welche Schritte bei der Umkonfigurierung der Zellen notwendig sind und wie eine Konfiguration innerhalb des Konfigurierungsprogramms abgearbeitet wird.

Figur 5 stellt die Ladelogik und ihre Register dar. Die Ladelogik besitzt fünf verschiedene Register. Dies sind:
1. Das Start-Konfiguration-REG (0501). In diesem Register steht die Adresse der Startkonfiguration innerhalb des Konfigurationspeichers. Die Daten sind derart in dem Konfigurationsprogramm enthalten, daß sie von der Ladelogik erkannt und in das Start-Konfiguration-REG übernommen werden können.
2. Ein FIFO-Start-REG (0502). Das FIFO-Start-REG zeigt auf den Beginn des FIFO-Speicherbereichs, innerhalb des Konfigurationsspeichers.
3. Ein FIFO-End-REG (0503). Das FIFO-End-REG kennzeichnet das Ende des FIFO-Speichers. An diese Stelle werden die Konfigurationsworte kopiert, welche durch die Ladelogik nicht verarbeitet werden konnten.
4. Ein FIFO-Free-Entry-REG (0504). Das FIFO-Free-Entry-REG zeigt auf den freien Eintrag, der dem Beginn (FIFO-Start-REG) des FIFO-Speichers am nächsten ist. An diese Stelle werden die Konfigurationsworte kopiert, welche während des Durchlaufens des FIFO-Speichers, wiederum nicht durch die Ladelogik verarbeitet werden konnten.
5. Einen Programmzähler (PC). Der PC zeigt auf die Adresse, innerhalb des Konfigurationsspeichers, in dem das nächste, durch die Ladelogik zu verarbeitende Konfigurationswort, steht.
6. Ein Adress-REG (0510). In diesem Register wird die Adresse einer zu addressierenden Zelle gespeichert.
7. Ein Data-REG (0511). Dieses Register speichert die Konfigurationsdaten, welche an die Zelle gesendet werden sollten, welche durch das Adress-REG angesprochen wird.
8. Ein Dispatch-REG (0512). Das Dispatch-REG speichert die Adresse des Eintrags in der Sprung-Tabelle, auf welchen die Ladelogik zugreift.

Weiterhin ist der Konfigurationsspeicher und seine verschiedenen Sektionen zu sehen. Dies sind:
1. Die Sprung-Tabelle (0506). Für jede Zelle, welche durch die Ladelogik konfigurierbar ist, existiert ein einziger Eintrag. In diesem Eintrag steht die Adresse, welche bei einer Signalisierung durch diese Zelle in den PC geladen wird.
2. Eine Start-Konfiguration (0507). Die Start-Konfiguration ist jene Konfiguration, welche nach dem Starten des Systems in den Baustein geladen wird.
3. Weitere Konfigurationen (0508). Diese Konfigurationen können während der Laufzeit des Systems in den Baustein geladen werden. Die Konfigurationen bestehen aus Konfigurationswörtern und Ladelogik Befehlen.
4. Einen FIFO-Speicher Bereich (0509). Der FIFO-Speicher Bereich enthält alle die Konfigurationsworte, welche durch die Ladelogik in einem ersten Versuch nicht erfolgreich verarbeitet werden konnten.

Figur 6 zeigt zwei Ausschnitte aus einer Konfiguration. In diesen Ausschnitten sind die Befehle und Konfigurationsworte zu sehen, welche durch die Ladelogik verarbeitet werden. Weiterhin sind zwei Ausschnitte aus der Sprung-Tabelle zu sehen (0601 und 0607) und der Zustand dieser Ausschnitte (0602 und 0608) nach der Abarbeitung der beiden Konfigurationsausschnitte.

### Ausführungsbeispiele

Es wird angenommen, daß ein Baustein oder mehrere Bausteine durch eine Ladelogik, wie beschrieben, umkonfiguriert werden sollen. Weiterhin sei angenommen, daß das System bereits die Startkonfiguration geladen hat, und die Ladelogik sich im Zustand 'warten auf ein Ereignis' befindet. Die Ausführung beginnt mit dem Eintreffen eines Ereignisses von Zelle Nummer 41.

Die Ladelogik beginnt zuerst mit der Abarbeitung des FIFO-Speichers (0201). Dabei wird der Beginn des FIFO-Speichers aus dem Register FIFO-Start-REG in den PC übertragen. Die Daten an der Stelle, auf die der PC zeigt, werden gelesen. Nun wird überprüft, ob das Ende des FIFO-Speichers erreicht wurde. Dies ist in diesem Ausführungsbeispiel der Fall, da das System das erste Mal umgeladen wird.

Die Adresse der Zelle, welche das Signal ausgelöst hat, wird durch die Ladelogik in eine Adresse der Sprung-Tabelle umgerechnet. Diese berechnete Adresse wird in das Distpatch-REG geladen (0512). Die Ladelogik liest nun die Adresse aus der Sprung-Tabelle (0506), welche an der Speicheradresse gespeichert ist, die durch das Dispatch-REG adressiert wird (0601). Diese Adresse wird in den PC geladen.

Daraufhin beginnt die Verarbeitung der Konfigurationsworte (0603). Es sei angenommen, daß der Befehl Nummer 3 (1,3 MUL) nicht ausgeführt werden kann, da die Zelle mit der Adresse (1,3) nicht umkonfiguriert werden kann. Die Daten werden nun in den FIFO-Speicher kopiert. Mit Erreichen des DISPATCH-Befehls (0604) wird an die Adresse 41 in der Sprung-Tabelle, eine neue Adresse eingetragen (0602). Der END-Befehl versetzt die Ladelogik wieder in den 'warten auf ein Ereignis' Zustand.

Nach einiger Zeit trifft nun wieder ein Signal von der Zelle 41 ein. Jetzt steht an der Adresse 42 der Sprung-Tabelle eine andere Adresse (0602). Die Ladelogik arbeitet wieder zuerst den FIFO Speicher ab. Nun befinden sich Daten in dem FIFO-Speicher.

Die Daten aus dem FIFO-Speicher werden gelesen und es wird versucht die adressierte Zelle mit den Daten zu laden. Da die Zelle jetzt umkonfiguriert werden kann, gelingt dies. Der Eintrag des FIFO Speichers wird daraufhin mit einer Leer-Kennung beschrieben.

Die ursprüngliche Verarbeitung wird fortgeführt und das Lesen von Konfigurationsdaten beginnt nun an einer unterschiedlichen Adresse (0605).

Diese Konfiguration wird abgearbeitet, der DISPATCH-Befehl schreibt diesmal eine Adresse in den Eintrag Nummer 12 der Sprung-Tabelle (0606). Danach versetzt der END-Befehl die Ladelogik wieder in den Zustand 'warten auf ein Ereignis'.

Dieses Wechselspiel wiederholt sich während der gesamten Laufzeit des Systems.

### Begriffsdefinition

**konfigurierbares Element** Ein konfigurierbares Element stellt eine Einheit eines Logik-Bausteines dar, welche durch ein Konfigurationswort für eine spezielle Funktion eingestellt werden kann. Konfigurierbare Elemente sind somit alle Arten von RAM-Zellen, Multiplexer, arithmetische logische Einheiten, Register und alle Arten von interner und externer Vernetzungsbeschreibung etc.

**Konfigurieren** Einstellen der Funktion und Vernetzung eines konfigurierbaren Elements.

**Konfigurationsspeicher** Der Konfigurationspeicher enthält ein oder mehrere Konfigurationsworte.

**Konfigurationswort** Ein Konfigurationswort besteht aus einer beliebig langen Bit-Reihe. Diese Bit-Reihe stellt eine gültige Einstellung für das zu konfigurierende Element dar, so daß eine funktionsfähige Einheit entsteht.

**Ladelogik** Einheit zum Konfigurieren und Umkonfigurieren von programmierbaren Bausteinen; ausgestaltet durch einen speziell an seine Aufgabe angepaßten Mikrokontroller oder eine Zustandsmaschine.

Makro Ein Makro ist eine Menge von Zellen, welche zusammen eine Aufgabe, Funktion etc. implementieren.

**Umkonfigurieren** Neues Konfigurieren von einer beliebigen Menge von konfigurierbaren Elementen eines programmierbaren Bausteins, während eine beliebige Restmenge von konfigurierbaren Elementen ihre eigenen Funktionen fortsetzen (vgl. konfigurieren).

**Rückmeldung** Eine Rückmeldung ist eine Aktion, welche eine Zelle auslösen kann. Bei einer Rückmeldung können verschiedene Informationen an die Einheit gesandt werden, welche die Rückmeldung empfängt.

**Zelle** siehe konfigurierbares Element.

**Zustandsmaschine** Logik, die diverse Zustände annehmen kann. Die Übergänge zwischen den Zuständen sind von verschiedenen Eingangsparametern abhängig. Diese Maschinen werden zur Steuerung komplexer Funktionen eingesetzt und entsprechen dem Stand der Technik

## Patentansprüche

1. Programmierbarer Logikbaustein mit einer Zellanordnung, welche eine Vielzahl von Zellen aufweist, und mit einer Ladelogik zur Umkonfigurierung mindestens einer Zelle der Zellanordnung
wobei die umzukonfigurierende Zelle Mittel zum Senden einer Rückmeldung aufweist und wobei weiterhin die Rückmeldung eine Adresse und/oder Nummer der umzukonfigurierenden Zelle beinhaltet; und
wobei in der Ladelogik ein Mittel vorgesehen ist, um eine Rückmeldung einer umzukonfigurierenden Zelle zu empfangen und um auf Grund der Rückmeldung auf Grundlage der in der Rückmeldungenthaltenen Adresse und/oder Nummer zu bestimmen (0203), welche Konfigurationsdaten zu laden sind, und um die Konfigurationsdaten in die umzukonfigurierende Zelle zu laden (0205), während nicht an der Umkonfigurierung beteiligte Zellen weiterarbeiten.

2. Programmierbarer Logikbaustein nach dem vorhergehenden Anspruch, wobei das Mittel der Ladelogik eine Sprungtabelle (0505) umfasst.

3. Verfahren zum Betrieb eines programmierbaren Logikbausteines mit einer Zellanordnung welche eine Vielzahl von Zellen aufweist, und mit einer Ladelogik zur Umkonfigurierung mindestens einer Zelle der Zellanordnung, wobei das Verfahren folgende Schritte aufweist: Senden einer Rückmeldung von der umzukonfigurierenden Zelle, wobei die Rückmeldung eine Adresse und/oder Nummer der umzukonfigurierenden Zelle beinhaltet; und Empfangen der Rückmeldung durch die Ladelogik, Bestimmen (0204) der zu ladenden Konfigurationsdaten durch die Ladelogik auf Grund der Rückmeldung auf Grundlage der in der Rückmeldung enthaltenen Adresse und/oder Nummer, Laden (0205) der Konfigurationsdaten in die umzukonfigurierende Zelle, während nicht an der Umkonfigurierung beteiligte Zellen weiterarbeiten.

4. Verfahren nach dem vorhergehenden Anspruch, **dadurch gekennzeichnet, dass** nach dem Laden einer Konfiguration die Berechnung der im Ansprechen auf die Quelle einer weiteren Rückmeldung zu ladenden weiteren Konfigurationsdaten geändert wird (Dispatch).

5. Verfahren nach einem der beiden vorhergehenden Ansprüche, **dadurch gekennzeichnet, dass** zunächst anhand der Konfigurationsdaten erste Zellen umkonfiguriert werden, die umladbar sind.

6. verfahren nach dem vorhergehenden Anspruch, **dadurch gekennzeichnet, dass** jene ersten Zellen als umladbar angesehen werden, die signalisieren, dass sie umgeladen werden können (0401).

7. Verfahren nach dem vorhergehenden Anspruch, **dadurch gekennzeichnet, dass** nicht ladbare Konfigurationsdaten später umgeladen werden.

8. Verfahren nach dem vorhergehenden Anspruch, **dadurch gekennzeichnet, dass** nicht ladbare Konfigurationsdaten zum späteren Laden in einem Zwischenspeicher abgelegt werden (0402).

9. Verfahren nach einem der vorhergehenden Ansprüche, **dadurch gekennzeichnet, dass** vor dem Laden einer weiteren Konfiguration versucht wird, frühere, früher nicht ladbare Konfigurationsdaten zu laden.

## Claims

1. Programmable logic module having a cell arrangement, which has a multiplicity of cells, and having load logic for reconfiguring at least one cell in the cell arrangement,
the cell to be reconfigured having means for transmitting a response and the response also containing an address and/or number of the cell to be reconfigured; and
a means being provided in the load logic in order to receive a response from a cell to be reconfigured and in order to use the response as a basis for determining (0203) which configuration data need to be loaded on the basis of the address and/or number contained in the response and in order to load (0205) the configuration data into the cell to be reconfigured, while cells which are not involved in the reconfiguration continue to operate.

2. Programmable logic module according to the preceding claim, the means in the load logic comprising a jump table (0505).

3. Method for operating a programmable logic module having a cell arrangement, which has a multiplicity of cells, and having load logic for reconfiguring at least one cell in the cell arrangement, the method having the following steps:
the cell to be reconfigured transmits a response, the response containing an address and/or number of the cell to be reconfigured; and
the load logic receives the response,
the load logic uses the response as a basis for determining (0204) the configuration data to be loaded on the basis of the address and/or number contained in the response,
the configuration data are loaded (0205) into the cell to be reconfigured, while cells which are not involved in the reconfiguration continue to operate.

4. Method according to the preceding claim, **characterized in that**, after a configuration has been loaded, the calculation of the further configuration data to be loaded in response to the source of a further response is changed (dispatch).

5. Method according to one of the two preceding claims, **characterized in that** the configuration data are first of all used to reconfigure first cells which can be reloaded.

6. Method according to the preceding claim, **characterized in that** those first cells which signal that they can be reloaded (0401) are considered to be reloadable.

7. Method according to the preceding claim, **characterized in that** configuration data which cannot be loaded are subsequently reloaded.

8. Method according to the preceding claim, **characterized in that** configuration data which cannot be loaded are stored (0402) in a buffer for subsequent loading.

9. Method according to one of the preceding claims, **characterized in that**, before a further configuration is loaded, an attempt is made to load earlier configuration data which could not be loaded earlier.

## Revendications

1. Composant logique programmable avec un agencement de cellules comportant une pluralité de cellules et avec une logique de chargement pour la reconfiguration d'au moins une cellule de l'agencement de cellule ;
la cellule à reconfigurer comportant des moyens d'envoi d'un accusé de réception et l'accusé de réception contenant en outre une adresse et/ou un numéro de la cellule à reconfigurer ; et
des moyens étant prévus dans la logique de chargement pour recevoir un accusé de réception d'une cellule à reconfigurer et pour déterminer, du fait de l'accusé de réception et sur la base de l'adresse et/ou du numéro contenus dans l'accusé de réception (0203), quelles données de configuration charger et pour charger les données de configuration dans la cellule à reconfigurer (0205) en évitant les cellules ne prenant pas part à la reconfiguration.

2. Composant logique programmable selon la revendication précédente, les moyens de la logique de chargement comprenant une table de recherche (0505).

3. Procédé de fonctionnement d'un composant logique programmable avec un agencement de cellules comportant une pluralité de cellules et avec une logique de chargement pour reconfigurer au moins une cellule de l'agencement de cellules, le procédé comportant les étapes suivantes :
envoi d'un accusé de réception depuis la cellule à reconfigurer, l'accusé de réception contenant une adresse et/ou un numéro pour la cellule à reconfigurer ; et
réception de l'accusé de réception par la logique de chargement ;
détermination (0204) des données de configuration à charger au moyen de la logique de chargement du fait de l'accusé de réception, sur la base de l'adresse et/ou du numéro contenus dans l'accusé de réception ;
chargement (0205) des données de configuration dans la cellule à reconfigurer en évitant les cellules ne prenant pas part à la reconfiguration.

4. Procédé selon la revendication précédente, **caractérisé en ce qu'**après le chargement de la configuration, le calcul des autres données de configuration à charger dans la réponse sur la base d'un autre accusé de réception est modifié (répartition, dispatch en anglais).

5. Procédé selon l'une quelconque des deux revendications précédentes, **caractérisé en ce que** les premières cellules transchargeables sont ensuite reconfigurées à l'aide des données de configuration.

6. Procédé selon la revendication précédente, **caractérisé en ce que** toutes les premières cellules peuvent être considérées comme des cellules transchargeables signalant qu'elles peuvent être transchargées (0401).

7. Procédé selon la revendication précédente, **caractérisé en ce que** les données de configuration chargeables peuvent être transchargées ultérieurement.

8. Procédé selon la revendication précédente, **caractérisé en ce que** les données de configuration non chargeables sont mémorisées pour un chargement ultérieur dans une mémoire tampon (0402).

9. Procédé selon l'une quelconque des revendications précédentes, **caractérisé en ce qu'**avant de charger une autre configuration, on essaie de charger les données de configuration antérieures n'ayant pas été chargées précédemment.
